# EUROPEAN PATENT SPECIFICATION

(11) **EP 2 453 119 B1**
(45) Date of publication and mention of the grant of the patent: **19.08.2015**
(21) Application number: 09847093.3
(22) Date of filing: 10.07.2009
(51) Int. Cl.: F01P 11/04, F16L 55/02

(54) **VEHICLE WITH A COOLANT CIRCULATION CIRCUIT**
KRAFTFAHRZEUG MIT EINEM KÜHLMITTELKREISLAUF
VEHICULE AVEC UN CIRCUIT DE LIQUIDE DE REFROIDISSEMENT

(43) Date of publication of application: 16.05.2012
(73) Proprietor: TOYOTA JIDOSHA KABUSHIKI KAISHA, Toyota-shi, Aichi-ken, 471-8571 (JP)
(72) Inventor: IWANO, Yoshihiro, Toyota-shi Aichi 471-8571 (JP); MIZUGUCHI, Keita, Toyota-shi Aichi 471-8571 (JP)
(74) Representative: IntÀ¨s, Didier Gérard André
(86) International application number: PCT/JP2009/062584
(87) International publication number: WO 2011/004491

(56) References cited:
- EP-A1- 0 798 529
- JP-A- 7 190 404
- JP-A- 2000 038 921
- JP-A- 2001 224 541
- US-A- 5 052 476

## Description

### TECHNICAL FIELD

The present invention relates to a vehicle comprising a coolant circulation circuit, and particularly a coolant circulation circuit having a liquid coolant circulating therethrough and suppressing occurrence of unusual noise.

### BACKGROUND ART

Conventionally, proposals have been made for a pipe and the like intended to suppress occurrence of unusual noise produced when a coolant circulates through the pipe.

For example, Japanese Patent Laying-Open No. 2001-224541 proposes an air hose having an accordion structure. This air hose has protrusions and recesses that are formed in ridges of the accordion structure and extend in the direction of the flow of the air.

Furthermore, the drain discharge apparatus disclosed in Japanese Patent Laying-Open No. 07-190404 includes a drain pan, a pump mechanism pumping the drain water stored in the drain pan, and a drain hose which is connected to this pump mechanism and extends upward by a predetermined pumping amount and then to the outside of the chamber.

The drain hose is provided with a plurality of partition plates for increasing the head loss within the drain hose. The drain pan is provided with a protrusion in the portion where it faces the pumping port of the pump mechanism.

Moreover, prior art documents US5052476A and EP0798529A1 disclose pipes comprising bubble nucleation regions.

### SUMMARY OF THE INVENTION

### PROBLEMS TO BE SOLVED BY THE INVENTION

The air hose disclosed in Japanese Patent Laying-Open No. 2001-224541 is predicated on the fact that air flows therethrough. However, Japanese Patent Laying-Open No. 2001-224541 fails to disclose any means for suppressing occurrence of unusual noise at the time of circulation of a liquid coolant.

Furthermore, in the drain discharge apparatus disclosed in Japanese Patent Laying-Open No. 07-190404, a plurality of partition plates are provided to reduce the flow velocity of the drain water for suppressing occurrence of unusual noise. However, the circulation of the coolant is hindered by the partition plates, which makes it difficult to achieve the original purpose of the coolant circulation circuit in the case where the partition plates are applied to the coolant circulation circuit aiming at cooling an object to be cooled.

The present invention has been made in light of the above-described problems, and an object of the present invention is to provide a vehicle including a coolant circulation circuit according to claim 1.

### MEANS FOR SOLVING THE PROBLEMS

A vehicle according to the present invention includes a passenger compartment, an engine room adjacent to said passenger compartment, and a coolant circulation circuit comprising a pipe through which a liquid coolant cooling an object to be cooled circulates, an internal combustion engine including said object to be cooled, and a heat exchanger for cooling the coolant. The pipe has an inner circumferential surface provided with a plurality of bubble trapping regions capable of trapping bubbles such that air within the pipe can be divided and trapped in the plurality of bubble trapping regions. The plurality of bubble trapping regions are placed at a distance from each other in a circumferential direction and an axial direction of the pipe. The internal combustion engine and heat exchanger are housed in the engine room, said internal combustion engine being disposed closer to the passenger compartment than the heat exchanger. Each of said bubble trapping regions is formed in a portion of said pipe located closer to said passenger compartment with respect to said internal combustion engine

Preferably, each of the bubble trapping regions is formed in a bend of the pipe. Preferably, a volume of the air which can be trapped in each of the bubble trapping regions is 5 cc or less.

Preferably, each of the bubble trapping regions is formed as a recess provided in the inner circumferential surface of the pipe. Preferably, the pipe includes a tubular pipe body and a recess defining member attached to the inner circumferential surface of the pipe body and having the recesses formed therein. Preferably, the pipe body is formed of a resin material.

Preferably, the recesses each are formed to have a volume which is decreased along the inner circumferential surface of the pipe from an upper portion toward a lower portion of the pipe.

Preferably, the pipe has the inner circumferential surface provided with a plurality of protrusions placed at a distance from each other in a circumferential direction and the axial direction of the pipe, and each of the bubble trapping regions is defined by the plurality of protrusions located around each of the bubble trapping regions.

Preferably, a width of each of the protrusions in the circumferential direction of the pipe is greater than the distance between the protrusions in the circumferential direction of the pipe. In addition, it has been originally intended to combine the above-described configurations together as appropriate in the present application.

### EFFECTS OF THE INVENTION

The coolant circulation circuit according to the present invention allows suppression of occurrence of unusual noise while ensuring circulation of the liquid coolant.

### BRIEF DESCRIPTION OF THE DRAWINGS

Fig. 1 is a plan view showing a part of a hybrid vehicle in which a coolant circulation circuit according to the present first embodiment is employed.
Fig. 2 is a circuit diagram showing the configuration of a main part of a PCU 700.
Fig. 3 is a perspective view showing a coolant circulation circuit 120.
Fig. 4 is a circuit diagram schematically showing coolant circulation circuit 120.
Fig. 5 is a cross sectional view of a pipe 134 as seen in the cross section vertical to the direction in which pipe 134 extends.
Fig. 6 is a cross-sectional side view of pipe 134.
Fig. 7 is a development view of pipe 134.
Fig. 8 is a perspective view showing the inner circumferential surface of pipe 134.
Fig. 9 is an enlarged side view of a part of pipe 134.
Fig. 10 is an enlarged cross sectional view of a part of pipe 134.
Fig. 11 is a cross sectional view of pipe 134 mounted in coolant circulation circuit 120 according to the second embodiment of the present invention.
Fig. 12 is a perspective view showing the inner circumferential surface of pipe 134 shown in Fig. 11.
Fig. 13 is a development view of a recess defining member 145.
Fig. 14 is a perspective view showing a variation of recess defining member 145.
Fig. 15 is a perspective view of a pipe 139 and a pipe 140.
Fig. 16 is a graph showing the unusual noise evaluation results in a first examination part 160 at the time of start-up of coolant circulation circuit 120 provided with pipes 139 and 140 each having bubble trapping region 150 formed therein.
Fig. 17 is a graph showing the unusual noise evaluation results in first examination part 160 at the time of start-up of coolant circulation circuit 120 provided with pipes 139 and 140 each having no bubble trapping region 150 formed in the inner circumferential surface.
Fig. 18 is a graph showing the unusual noise evaluation results in a second examination part 161 at the time of start-up of coolant circulation circuit 120 provided with pipes 139 and 140 each having bubble trapping region 150 formed therein.
Fig. 19 is a graph showing the unusual noise evaluation results in second examination part 161 at the time of start-up of coolant circulation circuit 120 provided with pipes 139 and 140 each having no bubble trapping region 150 formed in the inner circumferential surface.
Fig. 20 is a perspective view of a pipe 133.
Fig. 21 is a graph showing the unusual noise evaluation results in a third examination part 162 at the time of start-up of coolant circulation circuit 120 provided with pipe 133 having bubble trapping region 150 formed therein.
Fig. 22 is a graph showing the unusual noise evaluation results in third examination part 162 at the time of start-up of coolant circulation circuit 120 provided with pipe 133 having no bubble trapping region 150 formed therein.
Fig. 23 is a perspective view showing a radiator 121.
Fig. 24 is a graph showing the unusual noise evaluation results about the unusual noise occurring in a fourth examination part 163 of radiator 121 at the time of driving of coolant circulation circuit 120 provided with radiator 121 having bubble trapping region 150 formed in an upper tank 135.
Fig. 25 is a graph showing the unusual noise evaluation results about the unusual noise occurring in fourth examination part 163 at the time of driving of coolant circulation circuit 120 provided with radiator 121 having no bubble trapping region 150 formed in upper tank 135.
Fig. 26 is a graph showing the unusual noise evaluation results about the unusual noise occurring in a fifth examination part 164 at the time of driving of coolant circulation circuit 120 provided with radiator 121 having bubble trapping region 150 formed in upper tank 135.
Fig. 27 is a graph showing the unusual noise evaluation results about the unusual noise occurring in fifth examination part 164 at the time of driving of coolant circulation circuit 120 provided with radiator 121 having no bubble trapping region 150 formed in upper tank 135.
Fig. 28 is a perspective view of a radiator lower hose 132.
Fig. 29 is a graph showing the unusual noise evaluation results about the unusual noise occurring in fourth examination part 165 at the time of driving of coolant circulation circuit 120 provided with radiator lower hose 132 having bubble trapping region 150 formed therein.
Fig. 30 is a graph showing the unusual noise evaluation results about the unusual noise occurring in fourth examination part 165 at the time of driving of coolant circulation circuit 120 provided with radiator lower hose 132 having no bubble trapping region 150 formed therein.
Fig. 31 is a perspective view of a water outlet 123.
Fig. 32 is a graph showing the unusual noise evaluation results about the unusual noise occurring in water outlet 123 at the time of start-up of coolant circulation circuit 120 provided with water outlet 123 having bubble trapping region 150 formed therein.
Fig. 33 is a graph showing the unusual noise evaluation results about the unusual noise occurring in water outlet 123 at the time of start-up of coolant circulation circuit 120 provided with water outlet 123 having no bubble trapping region 150 formed therein.

### MODES FOR CARRYING OUT THE INVENTION

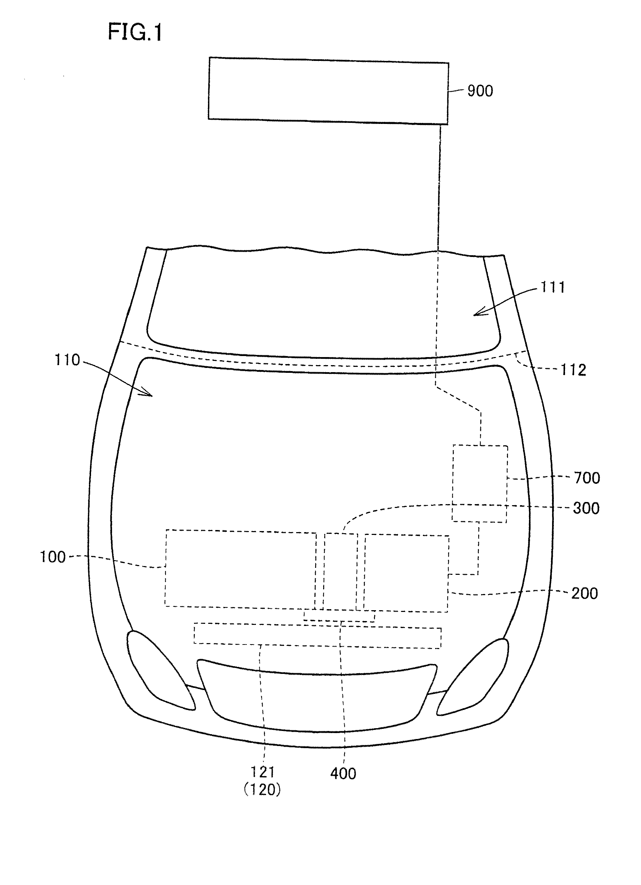

A hybrid vehicle will be hereinafter described with reference to Figs. 1 to 33.

### [First Embodiment]

Fig. 1 is a plan view showing a part of the hybrid vehicle according to the present first embodiment.

As shown in Fig. 1, the hybrid vehicle includes an engine compartment 110 as an engine room, a passenger compartment 111 occupied by a driver and other vehicle occupants, and a separator 112 separating engine compartment 110 and passenger compartment 111.

The hybrid vehicle includes an engine (internal combustion engine) 100, a motor generator 200, a power split device 300, a differential mechanism 400, a PCU (Power Control Unit) 700, a coolant circulation circuit 120 cooling engine 100, and a battery 900.

Engine 100, motor generator 200, power split device 300, differential mechanism 400, PCU 700, differential mechanism 400, radiator 121, and coolant circulation circuit 120 are disposed within engine compartment 110.

Motor generator 200 and PCU 700 are connected via the cable, and PCU 700 and battery 900 are also connected via the cable.

Furthermore, the power output apparatus including engine 100 and motor generator 200 is coupled to differential mechanism 400 via power split device 300 and a deceleration mechanism. Differential mechanism 400 is coupled to the driving wheel via the drive shaft.

Motor generator 200 serving as a three-phase alternating-current (AC) synchronous motor generator generates driving force by the AC power received from PCU 700. Furthermore, motor generator 200 is also used as a power generator during deceleration and the like of the hybrid vehicle, in which case it generates AC power by its power generation action (regenerative power generation) and outputs the generated AC power to PCU 700. Power split device 300 is configured to include a planetary gear.

PCU 700 converts the direct-current (DC) voltage received from battery 900 into an AC voltage for drive-controlling motor generator 200. Furthermore, PCU 700 converts the AC voltage generated by motor generator 200 into a DC voltage for charging battery 900.

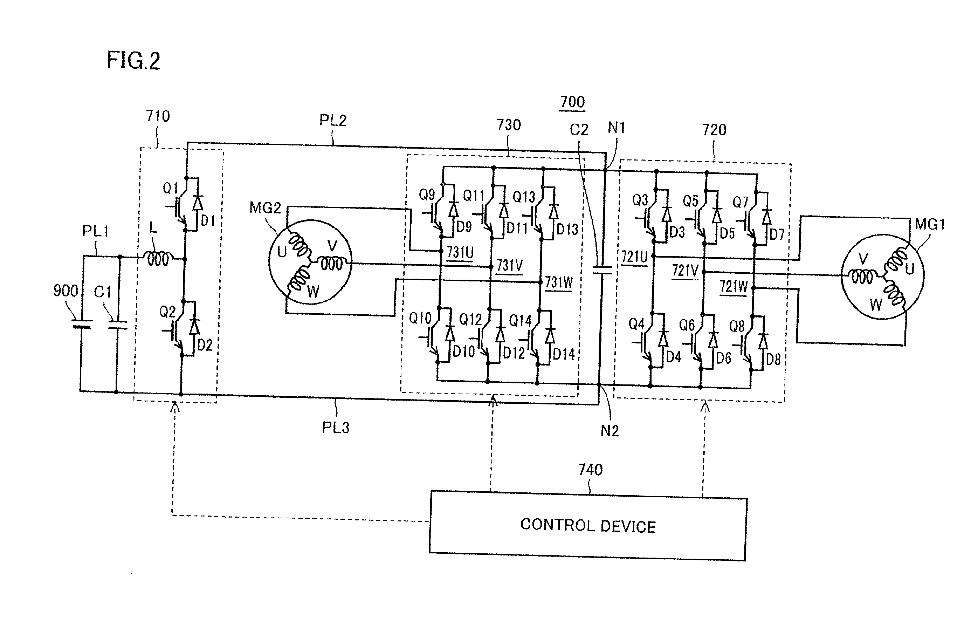

Fig. 2 is a circuit diagram showing the configuration of the main part of PCU 700. Referring to Fig. 2, motor generator 200 is configured to include motor generators MG1 and MG2. Motor generators MG1 and MG2 each include a rotor and a stator.

Motor generator MG1 mainly operates as a power generator that produces an electromotive force at both ends of a three-phase coil by the interaction between the magnetic field by a permanent magnet and the rotation of the rotor.

The rotor of motor generator MG2 is coupled via a planetary gear as a speed reducer to a ring gear case which rotates integrally with the ring gear of the planetary gear.

Motor generator MG2 operates as an electric motor which rotationally drives the rotor by the interaction between the magnetic field caused by the permanent magnet embedded in the rotor and the magnetic field formed by the three-phase coil wound around the stator. Furthermore, motor generator MG2 also operates as a power generator which produces an electromotive force at both ends of the three-phase coil by the interaction between the magnetic field caused by the permanent magnet and the rotation of a rotor 221.

PCU 700 is configured to include a converter 710, inverters 720, 730, a control device 740, a filter capacitor C1. and a smoothing capacitor C2. Converter 710 is connected between a battery B and inverters 720, 730. Inverters 720 and 730 are connected to motor generators MG1 and MG2, respectively.

Converter 710 includes power transistors Q1. Q2, diodes D1, D2, and a reactor L. Power transistors Q1 and Q2 are connected in series and each have a base receiving a control signal from control device 740. Diodes D 1 and D2 are connected between the collector and the emitter of each of power transistors Q1 and Q2, respectively, to supply current from the emitter side to the collector side of each of power transistors Q1 and Q2. Reactor L has one end connected to a power supply line PL1 which is connected to the positive electrode of battery B, and has the other end connected to the connecting point between power transistors Q1 and Q2.

Converter 710 uses reactor L to boost the DC voltage received from battery B, and supplies the boosted voltage to a power supply line PL2. Furthermore, converter 710 lowers the DC voltage received from inverters 720 and 730 to charge battery B.

Inverters 720 and 730 include U-phase arms 721 U and 731 U, V-phase arms 721 V and 731V, and W-phase arms 721W and 731 W, respectively. U-phase arm 721U, V-phase arm 721 V and W-phase arm 721 W are connected in parallel between a node N 1 and a node N2. Similarly, U-phase arm 731 U, V-phase arm 731 V and W-phase arm 73 1 W are connected in parallel between node N1 and node N2.

U-phase arm 721U includes two power transistors Q3 and Q4 connected in series. Similarly, U-phase arm 731 U, V-phase arms 721 V and 731 V, and W-phase arms 721 W and 731 W include two series-connected power transistors of power transistors Q5 to Q14, respectively. Furthermore, diodes D3 to D 14 are connected between the collector and the emitter of each of power transistors Q3 to Q14, respectively, to supply current from the emitter side to the collector side.

Each intermediate point of the phase arms in each of inverters 720 and 730 is connected to the phase end of each phase coil in each of motor generators MG1 and MG2, respectively. In each of motor generators MG1 and MG2, three coils of the U-, V- and W-phases each have one end connected in common to a neutral point.

Filter capacitor C1 is connected between power supply lines PL1 and PL3, and smoothes the voltage level of power supply line PL1. Smoothing capacitor C2 is connected between power supply lines PL2 and PL3, and smoothes the voltage level of power supply line PL2.

Based on the drive signal from control device 740, inverters 720 and 730 convert the DC voltage from smoothing capacitor C2 into an AC voltage to drive motor generators MG1 and MG2.

Control device 740 calculates each phase coil voltage of motor generators MG1 and MG2 based on the motor torque command value, each phase current value of motor generators MG1 and MG2, and the input voltage of inverters 720 and 730. Based on the calculation results, control device 740 generates a PWM (Pulse Width Modulation) signal for turning on/off power transistors Q3 to Q14 and outputs the same to inverters 720 and 730.

Furthermore, control device 740 calculates a duty ratio of power transistors Q1 and Q2 for optimizing the input voltage of inverters 720 and 730 based on the above-mentioned motor torque command value and the motor rotation speed. Then, based on the calculation results, control device 740 generates a PWM signal for turning on/off power transistors Q1 and Q2 and outputs the same to converter 710.

Furthermore, control device 740 controls the switching operation of power transistors Q1 to Q14 in converter 710 and inverters 720, 730 in order to convert the AC power generated by motor generators MG1 and MG2 into a DC power for charging battery B.

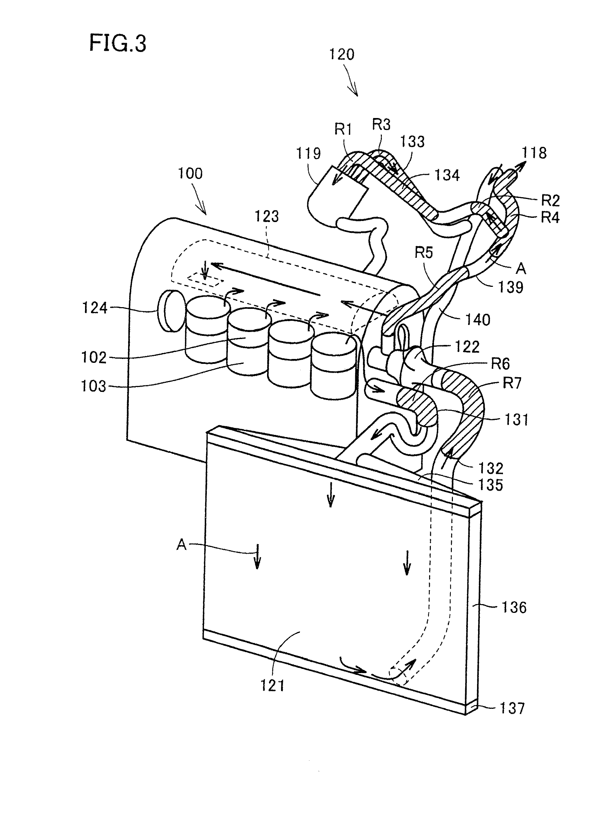

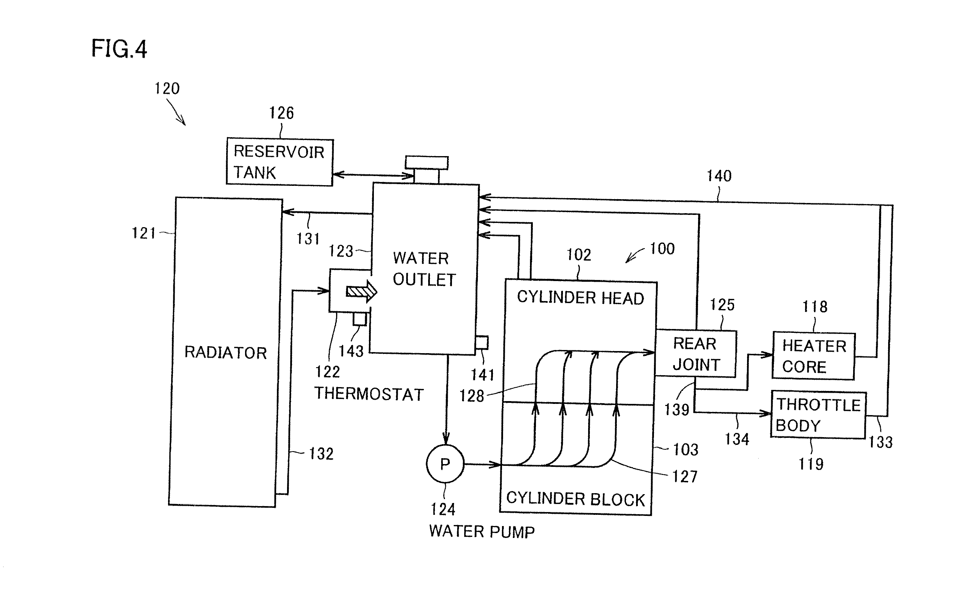

Fig. 3 is a perspective view showing coolant circulation circuit 120, and Fig. 4 is a circuit diagram schematically showing coolant circulation circuit 120.

As shown in Figs. 3 and 4, engine 100 includes a cylinder block 103 and a cylinder head 102 provided on cylinder block 103. Coolant circulation circuit 120 includes a radiator upper hose (pipe) 131, a radiator lower hose (pipe) 132, and pipes 133, 134, 139, 140 through which a liquid coolant A circulates for cooling the object to be cooled such as cylinder head 102 and cylinder block 103. Coolant circulation circuit 120 also includes a radiator 121 cooling coolant A.

Coolant circulation circuit 120 serves to cool cylinder head 102, cylinder block 103 and the like, and then cools coolant A in radiator (heat exchanger) 121 to supply coolant A to cylinder head 102 and the like again.

In Fig. 4, coolant circulation circuit 120 includes a thermostat 122 connected to radiator 121 and a water outlet 123 provided with thermostat 122.

A reservoir tank 126 is connected to water outlet 123 in which case excessive coolant A is stored in reservoir tank 126.

Coolant circulation circuit 120 includes a water pump 124 discharging coolant A supplied from water outlet 123, a cylinder-side water jacket 127 cooling cylinder block 103, a head-side water jacket 128 cooling cylinder head 102, and a rear joint 125 connected to head-side water jacket 128.

Thermostat 122 is provided in a portion through which the cooling water supplied from radiator 121 is introduced into water outlet 123. When the temperature of the cooling water is lower than the prescribed temperature, for example, lower than the temperature at the time of completion of warm-up of engine 100, thermostat 122 is closed. Accordingly, the cooling water having passed through radiator 121 does not flow into water outlet 123. In this case, the cooling water collected in water outlet 123 from rear joint 125 does not flow through radiator 121 but is sucked into water pump 124 and supplied to engine 100 again. The cooling water is not introduced into radiator 121, which causes an increase in the temperature of the cooling water at an early stage to thereby complete warm-up of engine 100 at an early stage.

Furthermore, in the case where the temperature of the cooling water is higher than the prescribed temperature, for example, higher than the temperature at the time of completion of warm-up of engine 100, thermostat 122 is opened. Consequently, the cooling water collected in water outlet 123 passes through radiator 121 and then flows through thermostat 122 into water outlet 123. The cooling water having passed through radiator 121 is heat-exchanged with the outside air and then cooled while it passes through radiator 121. Then, after the cooling water flows into water outlet 123, it is sucked by water pump 124 and supplied to engine 100 again. Thus, after completion of warm-up of engine 100, the cooling water is introduced into radiator 121 to positively cool the cooling water, so that overheating of engine 100 is prevented.

In Fig. 3, radiator 121 includes an upper tank 135, a radiator body 136 connected to upper tank 135 and disposed below upper tank 135, and a lower tank 137 provided at the lower end of radiator body 136 and connected to radiator body 136.

Upper tank 135 is formed to have an elongated shape in the width direction. Radiator upper hose 131 is connected to upper tank 135. Coolant A is supplied through radiator upper hose 131 to upper tank 135.

A plurality of radiator tubes are provided within radiator body 136 to which coolant A is supplied from upper tank 135 and cooled therein.

Coolant A cooled by radiator body 136 is supplied to lower tank 137, and cooled coolant A is discharged through radiator lower hose 132 connected to lower tank 137.

As shown in Fig. 4, water outlet 123 and radiator 121 are connected by radiator upper hose 131, while radiator 121 and thermostat 122 are connected by radiator lower hose 132.

Rear joint 125 and a throttle body 119 are connected by pipe 139 and pipe 134. Coolant A having passed through rear joint 125 flows into throttle body 119.

Throttle body 119 and water outlet 123 are connected by pipe 133 and pipe 140. Coolant A having passed through throttle body 119 flows into water outlet 123.

Rear joint 125 and a heater core 118 are connected by pipe 139. Coolant A having passed through rear joint 125 flows through pipe 139 into heater core 118.

Furthermore, heater core 118 and water outlet 123 are connected by pipe 140. Coolant A having passed through heater core 118 flows through pipe 140 into water outlet 123.

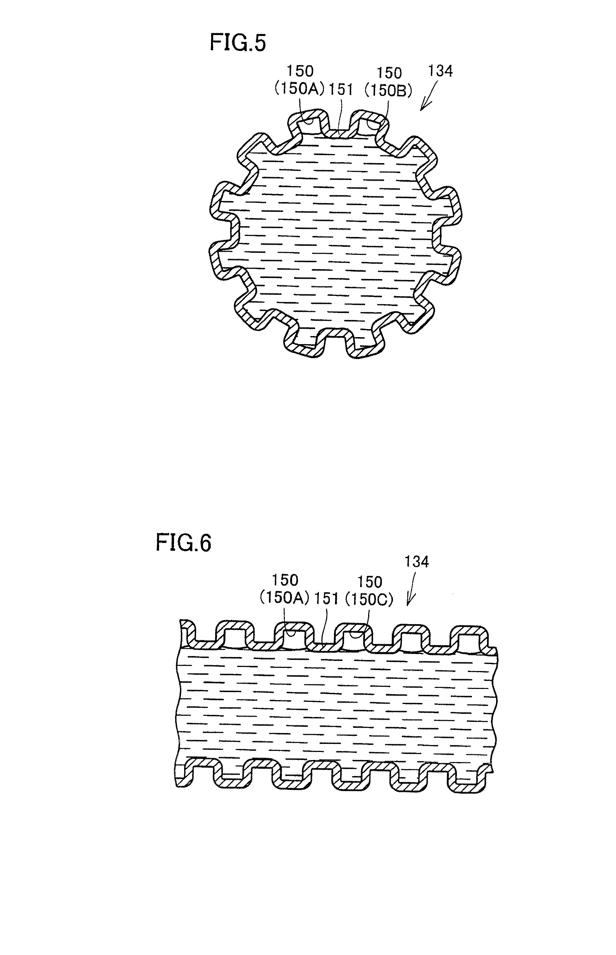

Fig. 5 is a cross sectional view of pipe 134 as seen in the cross section vertical to the direction in which pipe 134 extends. Fig. 6 is a cross-sectional side view of pipe 134. As shown in Figs. 5 and 6, pipe 134 has an inner circumferential surface provided with a plurality of bubble trapping regions 150 placed at a distance from each other in the circumferential direction and the axial direction of pipe 134.

In the example shown in each of Figs. 5 and 6, bubble trapping region 150 is formed as a recess so as to allow bubbles within pipe 134 to be trapped therein. Bubble trapping region 150 extends radially outwardly of the portions of the inner surface of pipe 134 which are adjacent to bubble trapping region 150 in the circumferential direction of pipe 134 and adjacent to bubble trapping region 150 in the axial direction of pipe 134, respectively.

Pipe 134 has the inner circumferential surface provided with a plurality of protrusions 151 placed at a distance from each other in the circumferential direction and the axial direction of the inner circumferential surface of pipe 134.

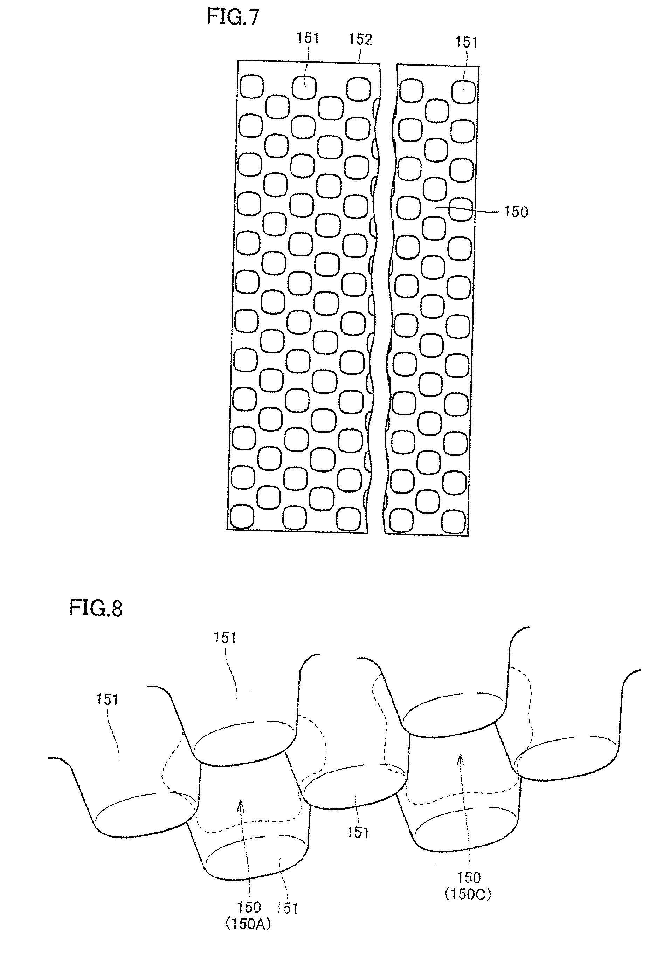

Fig. 7 is a development view of pipe 134. Fig. 8 is a perspective view showing the inner circumferential surface of pipe 134 and also is a perspective view schematically showing bubble trapping region 150 and protrusion 151.

As shown in Figs. 7 and 8, bubble trapping region 150 is defined by the plurality of protrusions 151 annularly arranged around bubble trapping region 150. In the example shown in each of Figs. 7 and 8, it is defined by bubble trapping regions 150 located at both sides of bubble trapping region 150 and arranged in the circumferential direction of pipe 134, and bubble trapping regions 150 located in front of and behind bubble trapping region 150 and arranged in the axial direction of pipe 134.

Pipe 134 is made of a metal material. In order to manufacture pipe 134, a metal plate 152 in the shape of a flat plate is first prepared. Metal plate 152 is subjected to an embossing process to form a plurality of protrusions 151. Metal plate 152 having protrusions 151 formed thereon is rolled into a cylindrical shape, which is then welded at its both side edges. Consequently, pipe 134 having a plurality of bubble trapping regions 150 formed on the inner circumferential surface can be produced.

As shown in Fig. 5, protrusion 151 is disposed between one bubble trapping region 150A and another bubble trapping region 150B adjacent in the circumferential direction to this bubble trapping region 150A. The air bubbles trapped in bubble trapping region 150A and the air bubbles trapped in bubble trapping region 150B are separated by protrusion 151 located between bubble trapping region 150A and bubble trapping region 150B.

As shown in Fig. 6, protrusion 151 is also formed between bubble trapping region 150A and a bubble trapping region 150C adjacent in the axial direction to this bubble trapping region 150A. The air bubbles trapped in bubble trapping region 150A and the air bubbles trapped in bubble trapping region 150C are separated by protrusion 151 located between bubble trapping region 150A and bubble trapping region 150C.

In this way, the air bubbles trapped in each bubble trapping region 150 are prevented from being combined together and formed into a large air bubble.

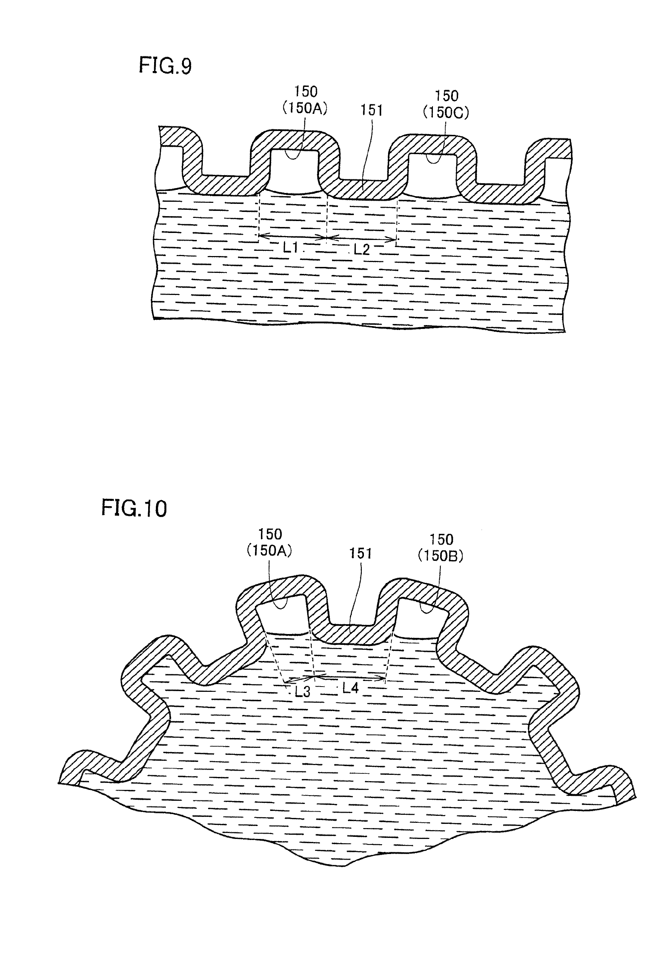

Fig. 9 is an enlarged side view of a part of pipe 134. As shown in Fig. 9, an axial direction length L2 of the inner end of protrusion 151 in pipe 134 is greater than an axial direction length L1 of the opening of bubble trapping region 150.

Consequently, the air bubbles trapped in bubble trapping region 150A and the air bubbles trapped in bubble trapping region 150C can be prevented from being integrally combined with each other.

Fig. 10 is an enlarged cross sectional view of a part of pipe 134 and also is a cross sectional view of pipe 134 as seen in the cross section vertical to the axial direction of pipe 134.

As shown in Fig. 10, a circumferential direction length L4 of the inner end of protrusion 151 in the circumferential direction of pipe 134 is greater than a circumferential direction length L3 of the opening of bubble trapping region 150 in the circumferential direction of pipe 134.

Consequently, the air bubbles trapped in bubble trapping region 150A and the air bubbles trapped in another bubble trapping region 150B adjacent in the axial direction to this bubble trapping region 150A can be prevented from being integrally combined with each other.

As shown in Figs. 8 and 9, the outer circumferential surface of each protrusion 151 and the opening edge of bubble trapping region 150 are formed to have a curved shape, so that the flow resistance of coolant A flowing through pipe 134 is reduced.

Although description has been made with regard to the example in which bubble trapping regions 150 are formed in the inner circumferential surface of pipe 134, the pipe having bubble trapping regions 150 formed therein is not limited to pipe 134.

In Fig. 3, bubble trapping region 150 may be formed in the inner circumferential surface of upper tank 135 serving as a pipe, and in the inner circumferential surface of each of radiator upper hose 131, radiator lower hose 132, pipes 133, 138, 139, 140, and water outlet 123.

It is preferable that pipe 134 has bubble trapping region 150 formed in the portions on its inner circumferential surface corresponding to regions R1 and R2 each including a bend formed to have a projection and the vicinity of the bend.

It is preferable that pipe 133 has bubble trapping region 150 formed in the portion on its inner circumferential surface corresponding to a region R3 including a bend formed to have a projection and the vicinity of the bend.

It is also preferable that pipe 139 has bubble trapping region 150 formed in the portions on its inner circumferential surface corresponding to regions R4 and R5 each including a bend and its vicinity.

It is also preferable that radiator upper hose 131 and radiator lower hose 132 each have bubble trapping region 150 formed in regions R6 and R7, respectively, each including a bend and its vicinity.

In each portion where regions R1 to R7 as described above are located, air generally tends to be accumulated in the state where driving of coolant circulation circuit 120 is stopped.

When bubble trapping regions 150 are formed at least in the portion in the inner circumferential surface of each pipe where regions R1 to R7 are located, occurrence of unusual noise at the time of start-up of coolant circulation circuit 120 can be suppressed.

Furthermore, it is preferable that each pipe, radiator upper hose 131 and radiator lower hose 132 are formed also in the portion extending in the horizontal direction. This is because air is more likely to be accumulated also in the portion of each pipe extending in the horizontal direction.

Thus, the manufacturing cost of each pipe can be kept low by limiting the region where bubble trapping region 150 and protrusion 151 are formed.

It is preferable that upper tank 135 has bubble trapping region 150 and protrusion 151 formed in the region in the inner surface of upper tank 135 that is located higher than the center section of upper tank 135 in the vertical direction.

While liquid coolant A is contained in the pipe of coolant circulation circuit 120, air may be mixed thereinto when coolant A is introduced into coolant circulation circuit 120. Furthermore, when coolant A within coolant circulation circuit 120 is replaced, air may be mixed into coolant circulation circuit 120.

In the case where driving of coolant circulation circuit 120 is stopped, the air mixed into coolant circulation circuit 120 is accumulated in the upper portion and the bend of each pipe, the upper portion of radiator 121, and the like.

In this case, a plurality of bubble trapping regions 150 as shown in Fig. 5 are formed in the inner circumferential surface of each pipe, the inner circumferential surface of upper tank 135 of radiator 121, and the inner circumferential surface of water outlet 123.

Accordingly, the air accumulated in the upper portion, the bend and the like of each pipe is trapped in each bubble trapping region 150, which causes the air to be divided into relatively small air bubbles.

In this state, when water pump 124 is driven and coolant A within coolant circulation circuit 120 starts to flow, the air bubbles trapped in each bubble trapping region 150 also start to flow together with coolant A.

In coolant circulation circuit 120 according to the present embodiment, when coolant A starts to flow, the air within coolant circulation circuit 120 is divided into small air bubbles in advance. In the case where large air bubbles are accumulated in the pipe and the like, the large air bubbles are divided into relatively small air bubbles at the time when coolant A starts to flow. Unusual noise occurs when large air bubbles are divided into smaller air bubbles.

In coolant circulation circuit 120 according to the present embodiment, the air trapped in coolant circulation circuit 120 is divided into relatively small air bubbles in advance, which allows suppression of occurrence of unusual noise when driving of coolant circulation circuit 120 is resumed.

The hybrid vehicle is generally in the state, during start-up of the vehicle, where motor generator 200 is started and engine 100 is stopped. In general, the sound produced when motor generator 200 is started is smaller than that produced when engine 100 is started.

Accordingly, the unusual noise occurring in coolant circulation circuit 120 at the time of start-up of the hybrid vehicle is decreased, which allows further improvement in quietness in passenger compartment 111 at the time of start-up of the vehicle.

Bubble trapping region 150 is formed such that the volume of the air bubbles trapped in bubble trapping region 150 is 5 cc or less.

Accordingly, the volume of the air bubbles accumulated in each of pipe 133, pipe 134, water outlet 123, pipe 139, pipe 140, radiator lower hose 132, and radiator upper hose 131 is set at 5 cc or less. Even in the case where coolant circulation circuit 120 is started and air bubbles having a volume of about 5 cc are divided into even smaller bubbles, the number of times the air bubbles are divided can be kept low. Consequently, the unusual noise occurring when air bubbles are divided can be reduced.

Heater core 118 includes a chamber inside which convection of coolant A occurs, so that coolant A of low temperature and coolant A of high temperature are mixed together.

Accordingly, when large air bubbles come into heater core 118, the air bubbles are divided into microscopic-sized bubbles due to the flow of coolant A. Thus, when bubble trapping regions 150 are formed in pipe 139 used for supplying coolant A to heater core 118, occurrence of large unusual noise within heater core 118 can be suppressed.

As shown in Fig. 10 in which pipe 134 is shown in cross section vertical to the direction in which pipe 134 extends, bubble trapping regions 150 each are formed to have a volume which is decreased along the inner circumferential surface of pipe 134 from the upper portion toward the lower portion of pipe 134.

Air bubbles are accumulated in the upper area when coolant circulation circuit 120 is stopped. Accordingly, when each bubble trapping region 150 located in the upper area is formed to have an increased volume, leakage of air bubbles from bubble trapping region 150 can be suppressed. Consequently, it becomes possible to prevent the air bubbles trapped in bubble trapping regions 150 adjacent to each other from being integrally combined with each other.

In Figs. 1 and 3, engine 100 is located closer to passenger compartment 111 than radiator 121. It is preferable that bubble trapping regions 150 are formed in the portion of each of pipes 133, 134, 139, and 140 such that they are located closer to passenger compartment 111 with respect to engine 100.

In other words, it is preferable that bubble trapping regions 150 are formed in the portion of each of pipes 133, 134 and 139 that is located where regions R1 to R4 are provided.

The portion located closer to passenger compartment 111 with respect to engine 100 is in close proximity to passenger compartment 111. Thus, unusual noise occurring in this portion can be readily heard by the vehicle occupants in passenger compartment 111.

Thus, when bubble trapping regions 150 are intentionally formed in the portion closer to passenger compartment 111, occurrence of unusual noise in the portion closer to passenger compartment 111 can be suppressed, thereby ensuring the quietness in passenger compartment 111.

### [Second Embodiment]

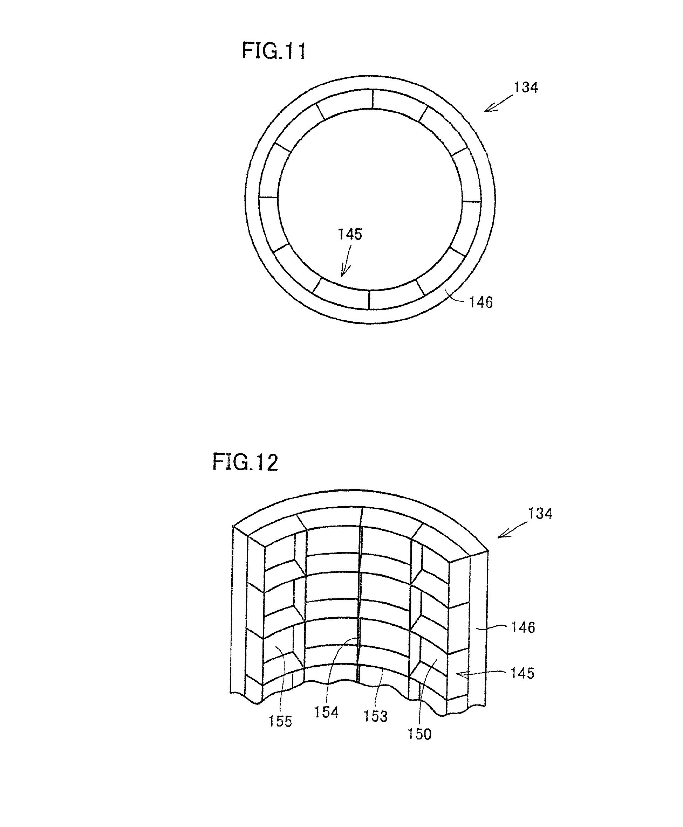

Referring to Figs. 11 to 13 and Figs. 1 and 3 as described above, a vehicle with a coolant circulation circuit 120 according to the second embodiment of the present invention will be hereinafter described. It is to be noted that the components shown in Figs. 11 to 13 identical or corresponding to those shown in Figs. 1 to 10 as described above are designated by the same reference characters, and description thereof will not be repeated.

Fig. 11 is a cross sectional view of pipe 134 mounted in coolant circulation circuit 120 of a vehicle according to the second embodiment of the present invention.

In the example shown in Fig. 11, pipe 134 includes a tubular pipe body 146 made of metal or resin and a recess defining member 145 inserted into this tubular pipe body 146.

Fig. 12 is a perspective view showing the inner circumferential surface of pipe 134 shown in Fig. 11. As shown in Fig. 12, recess defining member 145 includes a plate member 155 disposed on the inner circumferential surface of pipe 134, and a plurality of partition members 153 and a plurality of partition members 154 which are disposed on the main surface of plate member 155 and defining a plurality of bubble trapping regions 150.

Partition members 153 each extend in the circumferential direction of pipe body 146 and are arranged at a distance from each other in the direction in which pipe body 146 extends. Partition members 154 each extend in the direction in which pipe 134 extends, and are arranged at a distance from each other in the circumferential direction.

Furthermore, a plurality of bubble trapping regions 150 each are formed as a recess by plate member 155, partition members 154, and partition members 153.

The height of each of partition member 153 and partition member 154 is set approximately at I mm to 2 mm, for example, so as to suppress an increase in the flow resistance of coolant A flowing through pipe 134.

Also in pipe 134 shown in Figs. 11 and 12, a plurality of bubble trapping regions 150 are formed in the inner circumferential surface, which allows suppression of occurrence of unusual noise at the time of start-up of coolant circulation circuit 120.

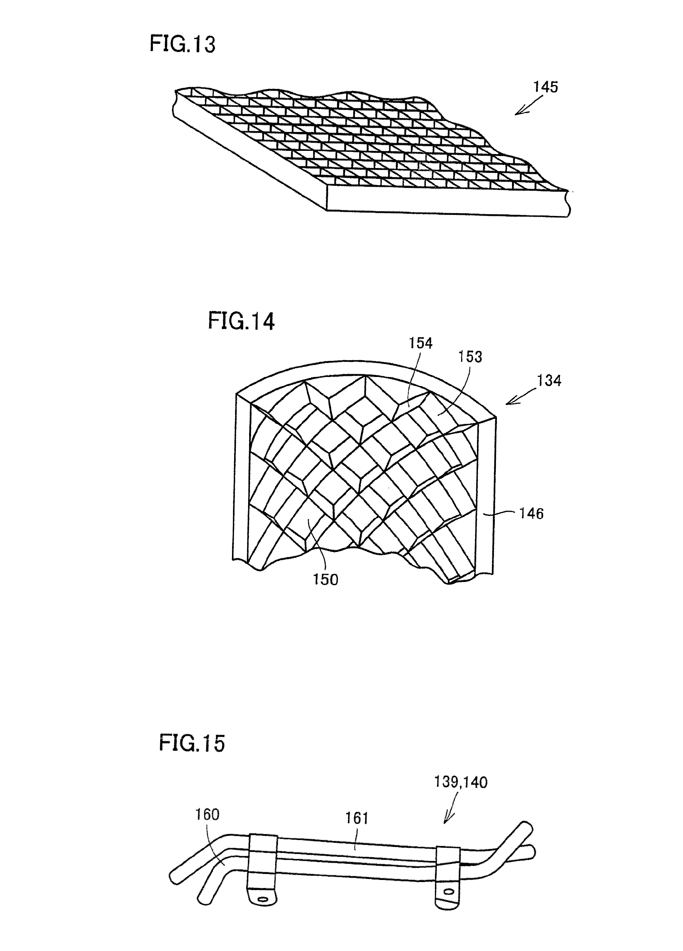

Pipe 134 can be formed by inserting recess defining member 145 into pipe body 146. Fig. 13 is a development view of recess defining member 145. Recess defining member 145 is provided by forming a frame body 156 as shown in Fig. 13 in a cylindrical shape and inserting it into pipe body 146. Frame body 156 includes a plate member in the shape of a plate, and partition member 154 and plate member 155.

Thus, when recess defining member 145 is inserted into pipe body 146, pipe 134 can be readily formed, which allows a reduction in the manufacturing cost while simplifying the manufacturing process.

Furthermore, deformation of pipe body 146 is not required. Accordingly, even if pipe body 146 is made of resin material, bubble trapping regions 150 can be formed in the inner circumferential surface of pipe 134 by inserting recess defining member 145 into pipe body 146.

It is to be noted that the arrangement direction of partition members 153 and partition members 154 is not limited to the example shown in Fig. 12. As shown in Fig. 14, partition members 153 and partition members 154 may be arranged so as to extend to diagonally cross the direction in which pipe body 146 extends. Furthermore, bubble trapping regions 150 defined by recess defining member 145 each may be formed to have a volume which is decreased along the circumferential direction of pipe 134 from the upper portion toward the lower portion of pipe 134, as seen in the cross section of pipe 134 vertical to the direction in which pipe 134 extends.

Referring to Figs. 15 to 30, the examples to which the present invention is applied will be hereinafter described.

### Example 1

Fig. 15 is a perspective view of pipe 139 and pipe 140. In the example shown in Fig. 15, a steel pipe is employed as each of pipes 139 and 140.

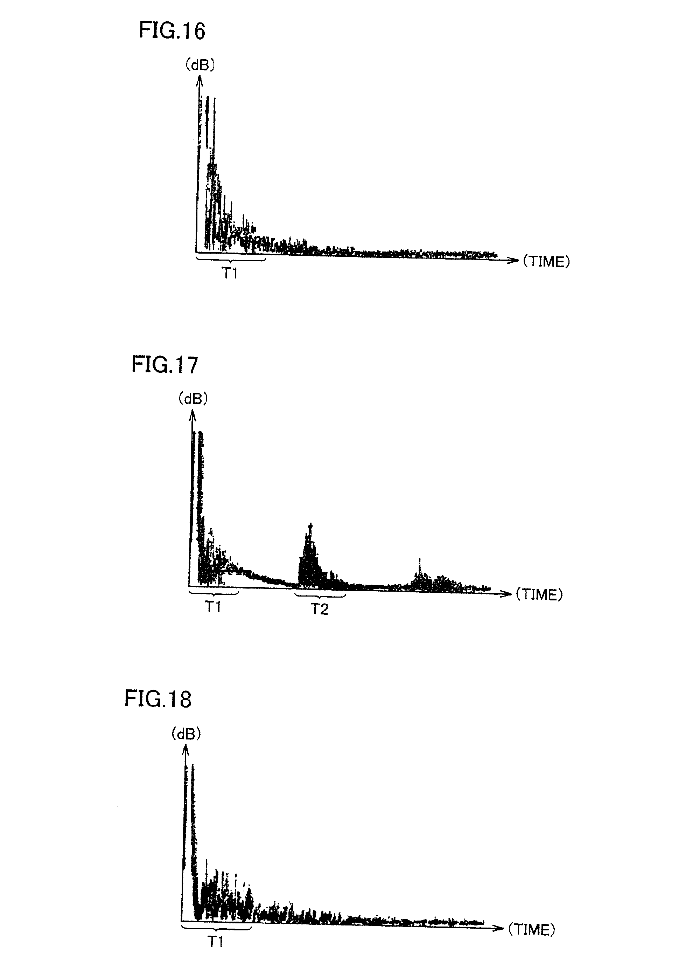

Fig. 16 is a graph showing the unusual noise evaluation results in a first examination part 160 at the time of start-up of coolant circulation circuit 120 provided with pipes 139 and 140 each having bubble trapping region 150 formed therein.

Fig. 17 is a graph showing the unusual noise evaluation results in first examination part 160 at the time of start-up of coolant circulation circuit 120 provided with pipes 139 and 140 each having no bubble trapping region 150 formed in the inner circumferential surface.

Fig. 18 is a graph showing the unusual noise evaluation results in a second examination part 161 at the time of start-up of coolant circulation circuit 120 provided with pipes 139 and 140 each having bubble trapping region 150 formed therein.

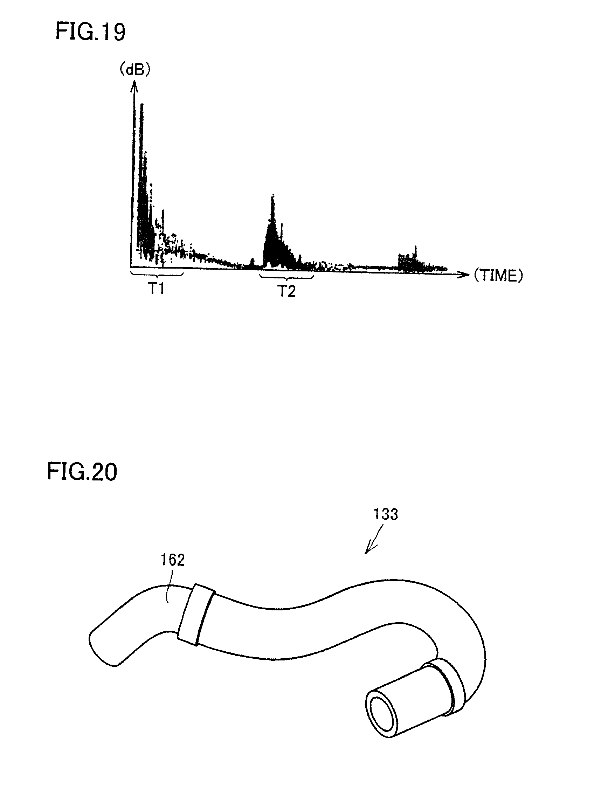

Fig. 19 is a graph showing the unusual noise evaluation results in second examination part 161 at the time of start-up of coolant circulation circuit 120 provided with pipes 139 and 140 each having no bubble trapping region 150 formed in the inner circumferential surface.

In addition, the unusual noise evaluation shown in each of Figs. 16 to 19 is performed by measuring the noise occurring in each examination part at the time of start-up of coolant circulation circuit 120 in the state where air is mixed into pipes 139 and 140.

In the graph shown in each of Figs. 16 to 19, the horizontal axis shows a decibel value and the horizontal axis shows a time period elapsed since start-up of coolant circulation circuit 120.

As shown in Figs. 16 to 18, it is found out that a large noise occurs in an examination time period T1. This shows start-up noise caused by vibration of water pump 124 and vibration occurring in coolant circulation circuit 120 that are caused at the time of start-up of coolant circulation circuit 120.

Thus, it is found out that start-up noise occurs in examination time period T1 both in the case where pipes 139 and 140 each having bubble trapping region 150 formed therein is mounted in coolant circulation circuit 120 and the case where pipes 139 and 140 each having no bubble trapping region 150 formed therein is mounted in coolant circulation circuit 120.

It is found out that unusual noise occurs during an examination time period T2 after examination time period T1 in coolant circulation circuit 120 provided with pipes 139 and 140 each having no bubble trapping region 150 formed therein.

This results from the fact that a prescribed time period elapses from the time when water pump 124 is started to cause coolant A in pipes 139 and 140 to start to flow until the time when the air bubbles within pipes 139 and 140 are divided into relatively small air bubbles.

In contrast, it is also found out that unusual noise does not occur in pipes 139 and 140 in the case of coolant circulation circuit 120 provided with pipes 139 and 140 each having bubble trapping region 150 formed therein.

### Example 2

Fig. 20 is a perspective view of pipe 133. In the example shown in Fig. 20, a rubber hose is employed for pipe 133.

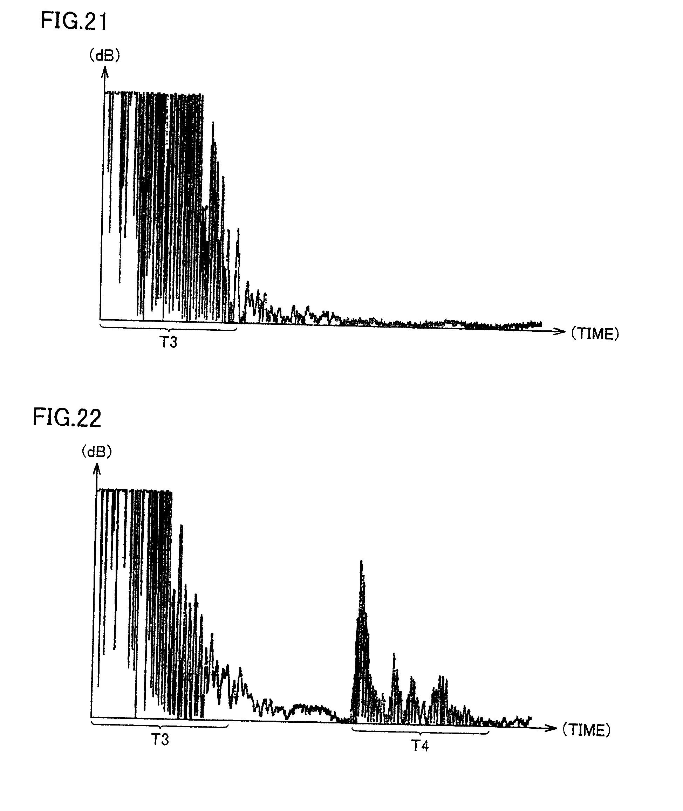

Fig. 21 is a graph showing the unusual noise evaluation results in a third examination part 162 of pipe 133 at the time of start-up of coolant circulation circuit 120 provided with pipe 133 having bubble trapping region 150 formed therein.

Fig. 22 is a graph showing the unusual noise evaluation results in third examination part 162 of pipe 133 at the time of start-up of coolant circulation circuit 120 provided with pipe 133 having no bubble trapping region 150 formed therein.

The unusual noise evaluation shown in each of Figs. 21 and 22 is performed by measuring the noise occurring in the examination part when coolant circulation circuit 120 is started in the state where air is mixed into pipe 133.

In the graph shown in each of Figs. 21 and 22, the horizontal axis shows a decibel value and the horizontal axis shows a time period elapsed since start-up of coolant circulation circuit 120.

As shown in Figs. 21 and 22, the start-up noise occurring during start-up is detected in an examination time period T3 immediately after start-up of coolant circulation circuit 120.

As shown in Fig. 22, it is found out that unusual noise occurs in third examination part 162 during an examination time period T4 after examination time period T3 in the case of coolant circulation circuit 120 provided with pipe 133 having no bubble trapping region 150 formed therein.

In contrast, it is found out that unusual noise does not occur after examination time period T1 in the case of coolant circulation circuit 120 provided with third examination part 162 having bubble trapping region 150 formed therein.

### Example 3

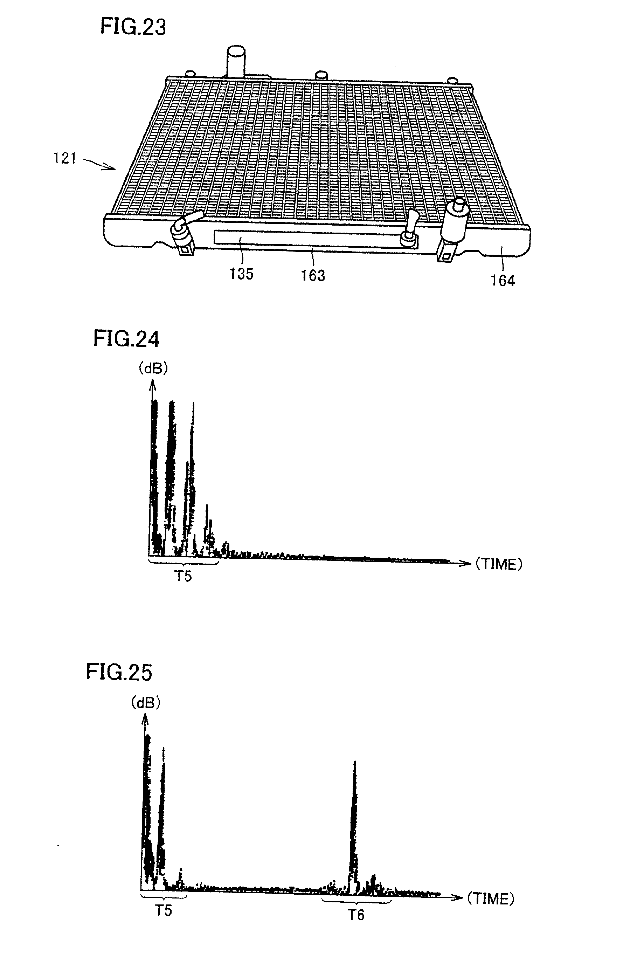

Fig. 23 is a perspective view showing radiator 121.

Fig. 24 is a graph showing the unusual noise evaluation results in a fourth examination part 163 at the time of driving of coolant circulation circuit 120 provided with radiator 121 having bubble trapping region 150 formed in an upper tank 135.

Fig. 25 is a graph showing the unusual noise evaluation results in fourth examination part 163 at the time of driving of coolant circulation circuit 120 provided with radiator 121 having no bubble trapping region 150 formed in upper tank 135.

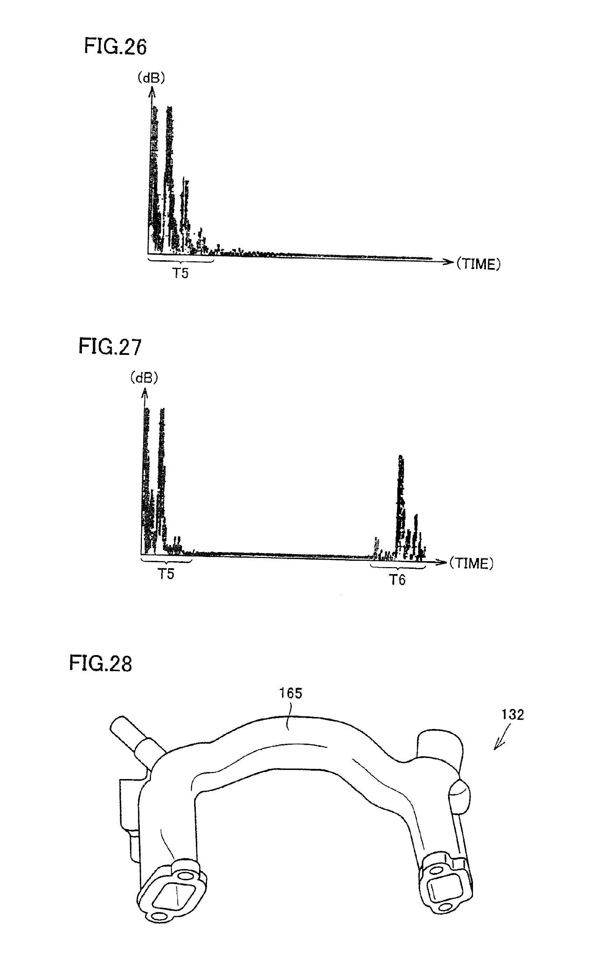

Fig. 26 is a graph showing the unusual noise evaluation results about the unusual noise occurring in a fifth examination part 164 at the time of driving of coolant circulation circuit 120 provided with radiator 121 having bubble trapping region 150 formed in upper tank 135.

Fig. 27 is a graph showing the unusual noise evaluation results about the unusual noise occurring in fifth examination part 164 at the time of driving of coolant circulation circuit 120 provided with radiator 121 having no bubble trapping region 150 formed in upper tank 135.

The unusual noise evaluation shown in each of Figs. 24 to 27 is performed by measuring the noise occurring in each examination part when coolant circulation circuit 120 is started in the state where air is mixed into upper tank 135.

In the graph shown in each of Figs. 24 to 27, the horizontal axis shows a decibel value and the horizontal axis shows a time period elapsed since start-up of coolant circulation circuit 120.

As shown in Figs. 24 to 27, it is found out that start-up noise occurs in an examination time period T5 immediately after coolant circulation circuit 120 is started both in the case of coolant circulation circuit 120 provided with radiator 121 having bubble trapping region 150 formed therein and the case of coolant circulation circuit 120 provided with radiator 121 having no bubble trapping region 150 formed therein.

As shown in Figs. 25 and 27, it is found out that unusual noise occurs in an examination time period T6 after examination time period T5 in the case of coolant circulation circuit 120 provided with radiator 121 having no bubble trapping region 150 formed therein.

In contrast, as shown in Figs. 24 to 26, it is found out that unusual noise does not occur after examination time period T5 in the case of coolant circulation circuit 120 provided with radiator 121 having bubble trapping region 150 formed therein.

### Example 4

Fig. 28 is a perspective view of radiator lower hose 132. In the example shown in Fig. 28, radiator lower hose 132 is made of aluminum.

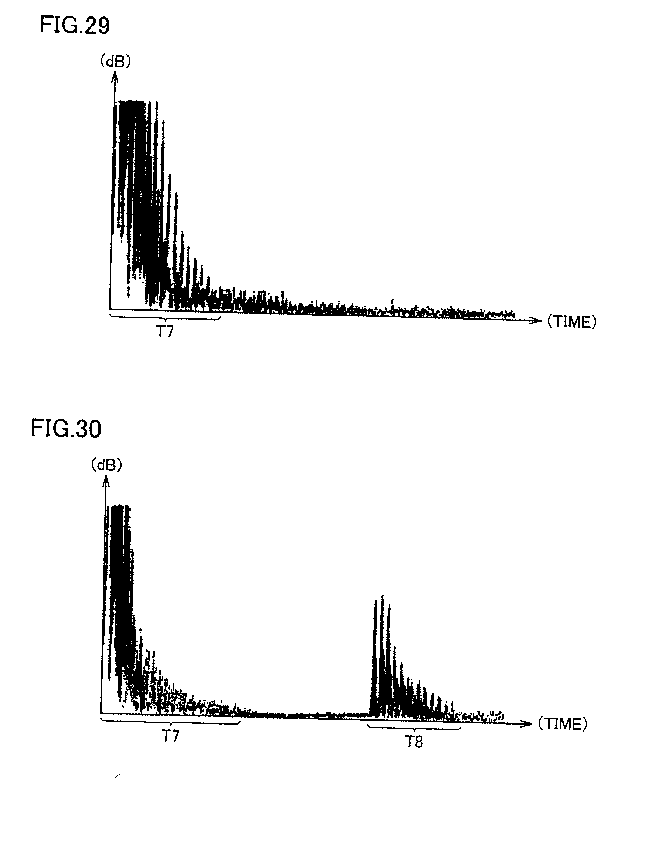

Fig. 29 is a graph showing the unusual noise evaluation results about the unusual noise occurring in a fourth examination part 165 at the time of driving of coolant circulation circuit 120 provided with radiator lower hose 132 having bubble trapping region 150 formed therein.

Fig. 30 is a graph showing the unusual noise evaluation results about the unusual noise occurring in fourth examination part 165 at the time of driving of coolant circulation circuit 120 provided with radiator lower hose 132 having no bubble trapping region 150 formed therein.

The unusual noise evaluation shown in each of Figs. 29 and 30 is performed by measuring the noise occurring in each examination part when coolant circulation circuit 120 is started in the state where air is mixed into radiator lower hose 132. In the graph shown in each of Figs. 29 and 30, the horizontal axis shows a decibel value and the horizontal axis shows a time period elapsed since start-up of coolant circulation circuit 120.

As shown in Figs. 29 and 30, start-up noise occurs in an examination time period T7 immediately after start-up of coolant circulation circuit 120 both in the case of coolant circulation circuit 120 provided with radiator lower hose 132 having no bubble trapping region 150 formed therein and the case of coolant circulation circuit 120 provided with radiator lower hose 132 having bubble trapping region 150 formed therein.

It is found out that unusual noise occurs in an examination time period T8 after examination time period T7 in the case of coolant circulation circuit 120 provided with radiator lower hose 132 having no bubble trapping region 150 formed therein.

In contrast, it is found out that a large noise does not occur after examination time period T7 in the case of coolant circulation circuit 120 provided with radiator lower hose 132 having bubble trapping region 150 formed therein.

### Example 5

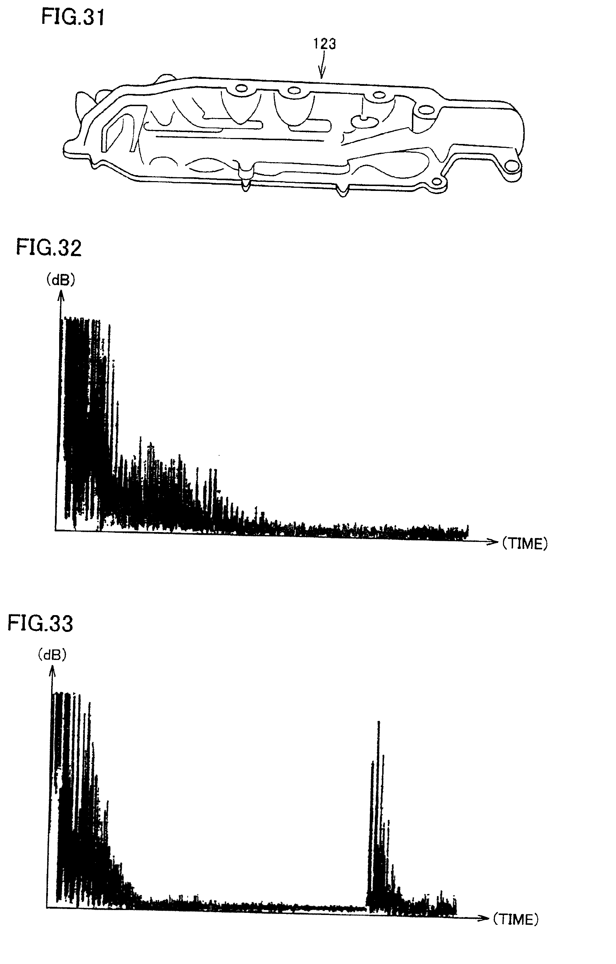

Fig. 31 is a perspective view of water outlet 123. This water outlet 123 is made of aluminum.

Fig. 32 is a graph showing the unusual noise evaluation results about the unusual noise occurring in water outlet 123 at the time of start-up of coolant circulation circuit 120 provided with water outlet 123 having bubble trapping region 150 formed therein.

Fig. 33 is a graph showing the unusual noise evaluation results about the unusual noise occurring in water outlet 123 at the time of start-up of coolant circulation circuit 120 provided with water outlet 123 having no bubble trapping region 150 formed therein.

In Figs. 32 and 33, the noise is measured that occurs in radiator lower hose 132 when coolant circulation circuit 120 is started in the state where air is mixed into each radiator lower hose 132. In Figs. 32 and 33, the horizontal axis shows a decibel value and the horizontal axis shows a time period elapsed since start-up of coolant circulation circuit 120.

As shown in Figs. 32 and 33, it is found out that start-up noise occurs immediately after start-up of coolant circulation circuit 120 both in the case of coolant circulation circuit 120 provided with water outlet 123 having bubble trapping region 150 formed therein and the case of coolant circulation circuit 120 provided with water outlet 123 having no bubble trapping region 150 formed therein.

As shown in Fig. 33, it is found out that unusual noise occurs after the start-up noise stops in the case of coolant circulation circuit 120 provided with water outlet 123 having no bubble trapping region 150 formed therein.

As shown in Fig. 32, it is found out that large unusual noise does not occur after start-up noise stops in the case of coolant circulation circuit 120 provided with water outlet 123 having bubble trapping region 150 formed therein.

Although the embodiments of the present invention have been described as above, it should be understood that the embodiments disclosed herein are by way of example only, and are not to be taken by way of limitation. The scope of the present invention is defined by the appended claims. Furthermore, the above-described numerical values and the like are by way of example only, and are not limited to the above-described numerical values and range.

### INDUSTRIAL APPLICABILITY

The present invention is applicable to a vehicle comprising a coolant circulation circuit, and particularly suitable to a coolant circulation circuit having a liquid coolant circulating therethrough and suppressing occurrence of unusual noise.

### DESCRIPTION OF THE REFERENCE SIGNS

100 engine, 102 cylinder head, 103 cylinder block, 110 engine compartment, 111 passenger compartment, 112 separator, 118 heater core, 119 throttle body, 120 coolant circulation circuit, 121 radiator, 122 thermostat, 123 water outlet, 124 water pump, 125 rear joint, 126 reservoir tank, 127 cylinder-side water jacket, 128 head-side water jacket, 131 radiator upper hose, 132 radiator lower hose, 133, 138, 139, 140 pipe, 135 upper tank, 136 radiator body, 137 lower tank, 145 recess defining member, 146 pipe body, 150 bubble trapping region, 151 protrusion, 152 metal plate, 153, 154, 155 plate member, 156 frame body, 160 examination part, R1, R2, R3, R4, R5, R7 region.

## Claims

1. A vehicle including a passenger compartment (111), an engine room (110) adjacent to said passenger compartment (111), and a coolant circulation circuit comprising:
a pipe (134) through which a liquid coolant (A) for cooling an object to be cooled circulates,
an internal combustion engine (100) including said object to be cooled, and
a heat exchanger (121) for cooling said coolant (A), the vehicle being **characterized in that** said pipe (134) has an inner circumferential surface provided with a plurality of bubble trapping regions (150) capable of trapping bubbles such that air within said pipe (134) can be divided and trapped in said plurality of bubble trapping regions (150),
said plurality of bubble trapping regions being placed at a distance from each other in a circumferential direction and an axial direction of said pipe,
said internal combustion engine (100) and said heat exchanger (121) being housed in said engine room (110), said internal combustion engine (100) being disposed closer to said passenger compartment (111) than said heat exchanger (121), and
each of said bubble trapping regions (150) being formed in a portion of said pipe (134) located closer to said passenger compartment (111) with respect to said internal combustion engine (100).

2. The vehicle according to claim 1, wherein each of said bubble trapping regions (150) is formed in a bend of said pipe (134).

3. The vehicle according to claim 1, wherein a volume of the air which can be trapped in each of said bubble trapping regions (150) is 5 cc or less.

4. The vehicle according to claim 1, wherein each of said bubble trapping regions (150) is formed as a recess provided in the inner circumferential surface of said pipe (134).

5. The vehicle according to claim 4, wherein said pipe (134) includes a tubular pipe body (146) and a recess defining member (145) attached to an inner circumferential surface of said pipe body (146) and having said recesses formed therein.

6. The vehicle according to claim 5, wherein said pipe body (146) is formed of a resin material.

7. The vehicle according to claim 4, wherein said recesses each are formed to have a volume which is decreased along the inner circumferential surface of said pipe (134) from an upper portion toward a lower portion of said pipe (134), as seen in a cross section of said pipe (134) vertical to a direction in which said pipe (134) extends.

8. The vehicle according to claim 1, wherein said pipe (134) has the inner circumferential surface provided with a plurality of protrusions (151) placed at a distance from each other in a circumferential direction and an axial direction of said pipe (134), and
each of said bubble trapping regions (150) is defined by said plurality of protrusions (151) located around each of said bubble trapping regions (150).

9. The vehicle according to claim 8, wherein a width of each of said protrusions (151) in the circumferential direction of said pipe (134) is greater than the distance between said protrusions (151) in the circumferential direction of said pipe (134).

## Patentansprüche

1. Fahrzeug, umfassend einen Fahrgastraum (111), einen an den Fahrgastraum (111) angrenzenden Motorraum (110) und einen Kühlmittelkreis, umfassend:
ein Rohr (134), durch welches ein flüssiges Kühlmittel (A) zum Kühlen eines zu kühlenden Gegenstands zirkuliert,
einen Verbrennungsmotor (100), der den zu kühlenden Gegenstand umfasst, und
einen Wärmetauscher (121) zum Kühlen des Kühlmittels (A),
wobei das Fahrzeug **dadurch gekennzeichnet ist, dass** das Rohr (134) eine Innenumfangsoberfläche aufweist, die mit mehreren Blasenabscheidebereichen (150) versehen ist, die in der Lage sind, Blasen derart abzuscheiden, dass Luft in dem Rohr (134) in den mehreren Blasenabscheidebereichen (150) getrennt und abgeschieden werden kann,
wobei die mehreren Blasenabscheidebereiche in einem Abstand voneinander in einer Umfangsrichtung und einer axialen Richtung des Rohres angeordnet sind,
der Verbrennungsmotor (100) und der Wärmetauscher (121) in dem Motorraum (110) angeordnet sind, der Verbrennungsmotor (100) näher bei dem Fahrgastraum (111) als der Wärmetauscher (121) angeordnet ist, und
jeder der Blasenabscheidebereiche (150) in einem Abschnitt des Rohres (134) ausgebildet ist, der in Bezug auf den Verbrennungsmotor (100) näher bei dem Fahrgastraum (111) angeordnet ist.

2. Fahrzeug nach Anspruch 1, wobei jeder der Blasenabscheidebereiche (150) in einer Biegung des Rohres (134) ausgebildet ist.

3. Fahrzeug nach Anspruch 1, wobei eine Menge der Luft, die in jedem der Blasenabscheidebereiche (150) abgeschieden werden kann, 5 cm³ oder weniger beträgt.

4. Fahrzeug nach Anspruch 1, wobei jeder der Blasenabscheidebereiche (150) als Ausnehmung ausgebildet ist, die in der Innenumfangsoberfläche des Rohres (134) vorgesehen ist.

5. Fahrzeug nach Anspruch 4, wobei das Rohr (134) einen rohrförmigen Rohrkörper (146) und ein ausnehmungsdefinierendes Glied (145), das an einer Innenumfangsoberfläche des Rohrkörpers (146) befestigt ist und darin gebildete Ausnehmungen aufweist, umfasst.

6. Fahrzeug nach Anspruch 5, wobei der Rohrkörper (146) aus einem Harzwerkstoff gebildet ist.

7. Fahrzeug nach Anspruch 4, wobei jede der Ausnehmungen derart ausgebildet ist, dass sie ein Volumen aufweist, welches in einem Querschnitt des Rohres (134) senkrecht auf eine Richtung betrachtet, in der sich das Rohr (134) erstreckt, entlang der Innenumfangsoberfläche des Rohres (134) von einem oberen Abschnitt in Richtung eines unteren Abschnitts des Rohres (134) abnimmt.

8. Fahrzeug nach Anspruch 1, wobei die Innenumfangsoberfläche des Rohres (134) mit mehreren Vorsprüngen (151) versehen ist, die in einem Abstand voneinander in einer Umfangsrichtung und einer axialen Richtung des Rohres (134) angeordnet sind, und
jeder der Blasenabscheidebereiche (150) durch die mehreren Vorsprünge (151) definiert ist, die um jeden der Blasenabscheidebereiche (150) herum angeordnet sind.

9. Fahrzeug nach Anspruch 8, wobei eine Breite jedes der Vorsprünge (151) in der Umfangsrichtung des Rohres (134) größer ist als der Abstand zwischen den Vorsprüngen (151) in der Umfangsrichtung des Rohres (134).

## Revendications

1. Véhicule incluant un habitacle (111), un compartiment-moteur (110) adjacent audit habitacle (111), et un circuit de circulation de fluide de refroidissement comprenant :
Un conduit (134) dans lequel circule un fluide de refroidissement liquide (A) destiné à refroidir un objet à refroidir ;
un moteur à combustion interne (100) incluant ledit objet à refroidir ; et
un échangeur de chaleur (121) destiné à refroidir ledit fluide de refroidissement (A),
le véhicule étant **caractérisé :**
**en ce que** ledit conduit (134) possède une surface circonférentielle interne pourvue d'une pluralité de régions de piégeage de bulles (150) capables de piéger des bulles de sorte que de l'air à l'intérieur dudit conduit (134) peut être divisé et piégé dans ladite pluralité de régions de piégeage de bulles (150) ;
**en ce que** les régions de ladite pluralité de régions de piégeage de bulles sont placées à distance les unes des autres dans la direction circonférentielle et dans la direction axiale dudit conduit ;
**en ce que** ledit moteur à combustion interne (100) et ledit échangeur de chaleur (121) sont logés dans ledit compartiment-moteur (110), ledit moteur à combustion interne (100) étant disposé plus près dudit habitacle (111) que ledit échangeur de chaleur (121) ; et
**en ce que** chacune desdites régions de piégeage de bulles (150) est formée dans une partie dudit conduit (134) située plus près dudit habitacle (111) par rapport audit moteur à combustion interne (100).

2. Véhicule selon la revendication 1, dans lequel chacune desdites régions de piégeage de bulles (150) est formée dans un coude dudit conduit (134).

3. Véhicule selon la revendication 1, dans lequel le volume de l'air qui peut être piégé dans chacune desdites régions de piégeage de bulles (150) est 5 cm³ ou moins.

4. Véhicule selon la revendication 1, dans lequel chacune desdites régions de piégeage de bulles (150) est formée comme un évidement ménagé dans la surface circonférentielle interne de ladite tuyauterie (134).

5. Véhicule selon la revendication 4, dans lequel ladite tuyauterie (134) inclut un corps de conduit tubulaire (146) et un élément définissant des évidements (145) fixé à la surface circonférentielle interne dudit corps de conduit (146) et dans lequel sont formés lesdits évidements.

6. Véhicule selon la revendication 5, dans lequel ledit corps de conduit (146) est fait d'une matière à base de résine.

7. Véhicule selon la revendication 4, dans lequel lesdits évidements sont chacun conformés pour avoir un volume qui diminue le long de la surface circonférentielle interne de dudit conduit (134) depuis une partie supérieure en direction d'une partie inférieure dudit conduit (134), vue en coupe transversale dudit conduit (134) perpendiculairement à la direction dans laquelle s'étend ledit conduit (134).

8. Véhicule selon la revendication 1, dans lequel ledit conduit (134) possède une surface circonférentielle interne pourvue d'une pluralité de protubérances (151) placées à distance les unes des autres dans la direction circonférentielle et dans la direction axiale dudit conduit (134), et
dans lequel chacune desdites régions de piégeage de bulles (150) est définie par ladite pluralité de protubérances (151) situées autour de chacune desdites régions de piégeage de bulles (150).

9. Véhicule selon la revendication 8, dans lequel la largeur de chacune desdites protubérances (151) dans la direction circonférentielle dudit conduit (134) est plus grande que la distance entre lesdites protubérances (151) dans la direction circonférentielle dudit conduit (134).
